(19) Europäisches Patentamt
European Patent Office
Office européen des brevets

(11) EP 4 410 420 A1

(12) EUROPEAN PATENT APPLICATION
published in accordance with Art. 153(4) EPC

(43) Date of publication:
**07.08.2024 Bulletin 2024/32**

(21) Application number: **22876373.6**

(22) Date of filing: **28.09.2022**

(51) International Patent Classification (IPC):
***B01J 20/281*** *(2006.01)* ***B01J 20/283*** *(2006.01)*
***B01J 20/285*** *(2006.01)* ***B01J 20/286*** *(2006.01)*

(52) Cooperative Patent Classification (CPC):
**B01J 20/281; B01J 20/283; B01J 20/285; B01J 20/286**

(86) International application number:
**PCT/JP2022/036248**

(87) International publication number:
**WO 2023/054507 (06.04.2023 Gazette 2023/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.09.2021 JP 2021158985**

(71) Applicant: **Daicel Corporation**
**Osaka 530-0011 (JP)**

(72) Inventors:
- **UOSAKI, Kosuke**
  **Tokyo 108-8230 (JP)**
- **UEDA, Takunori**
  **Tokyo 108-8230 (JP)**
- **YOKOO, Kairi**
  **Myoko-shi, Niigata 944-8550 (JP)**

(74) Representative: **Grünecker Patent- und Rechtsanwälte**
**PartG mbB**
**Leopoldstraße 4**
**80802 München (DE)**

# (54) METHOD FOR PRODUCING STATIONARY PHASE FOR COLUMN CHROMATOGRAPHY

(57) A method for producing a stationary phase for chromatography including radical copolymerization of a base material having a radically polymerizable functional group and a monomer having a radically polymerizable functional group in the presence of a radical initiator, wherein the radical copolymerization is performed in a heterogeneous system including a phase of the monomer having the radically polymerizable functional group and a phase of a solvent.

EP 4 410 420 A1

## Description

### Technical Field

The present disclosure relates to a method for producing a stationary phase for column chromatography.

### Background Art

Chromatography is the most effective means as a method for analyzing the components and their contents of a mixture and separating and purifying the components. In this method, different substances are separated using an inherent distribution ratio (also understood as adsorption equilibrium) of a substance in a solid (stationary phase) spatially fixed in a tube called a column or a capillary and a fluid (mobile phase) moving through the voids in the solid.

A stationary phase for chromatography is known in which a separating agent having a molecular recognition ability, such as a polysaccharide derivative or poly(4-vinylpyridine), is immobilized on a carrier. Since the immobilization percentage of the separating agent affects separation performance, solvent resistance, and other properties, various methods for immobilizing the separating agent on a carrier have been developed.

For example, Patent Document 1 describes a method in which a polymerizable polysaccharide derivative obtained by introducing a polymerizable unsaturated group into a polysaccharide derivative is radically copolymerized with another polymerizable unsaturated monomer different from the polymerizable polysaccharide derivative, and the resulting copolymer is immobilized on a porous carrier such as silica gel.

Patent Document 2 describes a method in which a polymerizable polysaccharide derivative is supported on a carrier having a polymerizable functional group, and then copolymerized with a polymerizable monomer, whereby the polysaccharide derivative is immobilized on the carrier.

Patent Document 3 describes a method in which a polymer of a vinyl monomer having a nitrogen-containing aromatic ring or an isopropenyl monomer containing a nitrogen-containing aromatic ring is immobilized on silica gel as a carrier by copolymerizing the vinyl monomer having a nitrogen-containing aromatic ring or the isopropenyl monomer containing a nitrogen-containing aromatic ring with silica gel into which a polymerizable functional group is introduced by a silane coupling agent.

### Citation list

#### Patent Document

Patent Document 1: JP 2002-148247 A
Patent Document 2: WO 03/091185
Patent Document 3: JP 2021-015129 A

### Summary of Invention

#### Technical Problem

However, there is still room for improvement in the immobilization percentage of the separating agent. On the other hand, it is also known that, for example, when the immobilization percentage of the polysaccharide derivative increases, the separation performance may decrease. Thus, it is required to develop a method capable of producing a stationary phase for chromatography with which a high immobilization percentage of a separating agent is obtained without sacrificing separation performance.

An object of the present disclosure is to provide a method capable of producing a stationary phase for chromatography with a high immobilization percentage of a separating agent and high separation performance.

#### Sduticn to Problem

To solve the problems described above, the inventors of the present invention have intensively studied. As a result, it has been found that a stationary phase with a high immobilization percentage of a separating agent and high separation performance can be obtained by radically copolymerizing a base material having a radically polymerizable functional group and a monomer having a radically polymerizable functional group in a solvent in which the monomer having the radically polymerizable functional group is not completely dissolved. That is, an overview of the present

disclosure is as described below.

[1] A method for producing a stationary phase for chromatography, the method comprising radical copolymerization of a base material having a radically polymerizable functional group and a monomer having a radically polymerizable functional group in the presence of a radical initiator, wherein
the radical copolymerization is performed in a heterogeneous system including a phase of the monomer having the radically polymerizable functional group and a phase of a solvent.
[2] The production method according to [1], wherein the base material having the radically polymerizable functional group includes a carrier and a polymer having a radically polymerizable functional group.
[3] The production method according to [2], wherein the polymer having the radically polymerizable functional group is physically adsorbed on a surface of the carrier.
[4] The production method according to [2] or [3], wherein the solvent is water or a mixed solvent of water and a water-soluble solvent in an amount of from 10 parts by volume to 300 parts by volume with respect to 100 parts by volume of water.
[5] The production method according to [4], wherein the monomer having the radically polymerizable functional group is one or more selected from the group consisting of butadiene, 2,3-dimethyl-1,3-butadiene, 2-methyl-1,3-butadiene, divinylbenzene, allyl (meth)acrylate, and styrene.
[6] The production method according to [1], wherein the base material having the radically polymerizable functional group is a carrier having the radically polymerizable functional group introduced on a carrier.
[7] The production method according to [6], wherein the solvent is water or a mixed solvent of water and a water-soluble solvent in an amount of from 10 parts by volume to 300 parts by volume with respect to 100 parts by volume of water.
[8] The production method according to [7], wherein the monomer having the radically polymerizable functional group is one or more selected from the group consisting of 2-vinylpyridine, 3-vinylpyridine, 4-vinylpyridine, 9-vinylcarbazole, 2-isopropenylpyridine, 3-isopropenylpyridine, 4-isopropenylpyridine, and 9-isopropenylcarbazole.
[9] The production method according to [6], wherein the solvent is a lipophilic solvent having a water/1-octanol partition coefficient (logPow) of 0.5 or more.
[10] The production method according to [9], wherein the monomer having the radically polymerizable functional group is one or more selected from the group consisting of 2-((meth)acryloyloxy)ethyl-2'-(trimethylammonio)ethyl phosphate, 2-(N-3-sulfopropyl-N,N-dimethylammonium)ethyl methacrylate, 3-(methacryloylamino)propyltrimethylammonium chloride, potassium 3-(methacryloyloxy)propanesulfonate, 2-hydroxyethyl methacrylate, and acrylamide.

Advantageous Effects of Invention

The present disclosure can provide a method capable of producing a stationary phase for chromatography with a high immobilization percentage of a separating agent and high separation performance.
The problems and effects of the present disclosure are not limited to those specifically described above and also include those obvious to a person skilled in the art based on the entire specification.

Description ofEmbodiments

The present disclosure is described in detail below through specific embodiments. However, each of the configurations in each embodiment, combinations thereof, and the like are examples, and various additions, omissions, substitutions, and other changes may be made as appropriate within a scope that does not depart from the spirit of the present disclosure. The present disclosure is not to be considered limited to embodiments.
Also, each aspect disclosed in the present specification can be combined with any other feature disclosed herein.
In the present specification, when a range of numerical values or physical property values are expressed with "to" between the values, the values before and after the "to" are intended to be included in the range.
A method for producing a stationary phase for chromatography according to an embodiment of the present disclosure includes radically copolymerization of a base material having a radically polymerizable functional group and a monomer having a radically polymerizable functional group in the presence of a radical initiator, wherein the radical copolymerization is performed in a heterogeneous system including a phase of the monomer having the radically polymerizable functional group and a phase of a solvent. The method for producing a stationary phase for chromatography according to the present embodiment may include other steps such as washing and drying in addition to the radical copolymerization.
In the production method according to the present embodiment, unlike known production methods, the radical copolymerization reaction is performed in a solvent in which the monomer having the radically polymerizable functional

group is not completely dissolved. Thus, the reaction system of the radical copolymerization reaction is a heterogeneous system including a phase of the monomer having the radically polymerizable functional group and a phase of the solvent. As shown in Examples described later, in the comparison of a case where a solvent in which the monomer having the radically polymerizable functional group is not completely dissolved is used as a solvent with a case where a solvent in which the monomer having the radically polymerizable functional group dissolves, a stationary phase having a higher immobilization percentage of a separating agent and a higher separation performance can be obtained in the former case. Thus, it is considered that the immobilization percentage of a separating agent and the separation performance of the stationary phase can be improved by appropriately selecting the monomer having the radically polymerizable functional group and the solvent so that the reaction system is the heterogeneous system described above.

Hereinafter, each reagent, reaction condition, and the like used in the radical copolymerization will be described.

Base material Having Radically Polymerizable Functional Group

The stationary phase for chromatography obtained by the production method according to the present embodiment (hereinafter, which may be simply referred to as "stationary phase") is a stationary phase in which a separating agent having a molecular recognition ability is immobilized on a carrier. The base material having the radically polymerizable functional group in the present embodiment includes a carrier and has a radically polymerizable group.

The radically polymerizable functional group of the base material having the radically polymerizable functional group is not particularly limited, and is preferably a functional group having an ethylenically unsaturated linking group. Specific examples of the functional group having an ethylenically unsaturated linking group include a hydrocarbon group having from 2 to 12 carbons and having a double bond at a terminal, such as a vinyl group, an allyl group, or an isopropenyl group; and a (meth)acryloyl group, and a vinyl group or a (meth)acryloyl group is preferable. In the present specification, "(meth)acryloyl" means acryloyl and/or methacryloyl, and "(meth)acryl" means acryl and/or methacryl.

Examples of the carrier include an organic carrier, an inorganic carrier, and an organic-inorganic hybrid carrier, and an inorganic carrier is preferable.

Examples of the organic carrier include polystyrene, poly(meth)acrylamide, and poly(meth)acrylate. Examples of the inorganic carrier include silica, alumina, magnesia, glass, kaolin, titanium oxide, zirconium oxide, silicate, and hydroxyapatite, and silica gel is preferable. When silica gel is used as the carrier, silica gel in which only a surface layer is porous, which is called a core shell or a peripheral, may be used. Examples of the organic-inorganic hybrid carrier include an organic-inorganic hybrid carrier formed by a sol-gel reaction between an alkoxysilane and an alkyl-substituted or alkylene-substituted alkoxysilane compound.

The form of the carrier is not particularly limited, and from the viewpoint of uniformizing the separation performance of the stationary phase, the carrier is preferably in the form of particles, and particularly preferably in the form of spherical particles. In the present specification, "spherical" does not only mean a true sphere shape and also includes shapes having circular, substantially circular, elliptical, or substantially elliptical cross-sectional shapes, such as a prolate spheroid and an oblate spheroid.

When the carrier is in the form of particles, the median size of the particles is not particularly limited and may be 1.5 μm or more, 3.0 μm or more, or 4.0 μm or more, and may be 15.0 μm or less, 10.0 μm or less, or 8.0 μm or less. That is, the median size of the carrier particles may be, for example, from 1.5 μm to 15.0 μm, from 3.0 μm to 10.0 μm, or from 4.0 μm to 8.0 μm. In the present specification, the median size means a size corresponding to a 50% cumulative value of a cumulative volume distribution curve measured by a laser diffraction-scattering particle size distribution analyzer, that is, a volume-based cumulative 50% diameter (D50).

The base material having the radically polymerizable functional group is preferably a base material including a carrier and a polymer having a radically polymerizable functional group (hereinafter, which may be referred to as "radically polymerizable polymer"), or a carrier having the radically polymerizable functional group introduced on a carrier.

When the base material having the radically polymerizable functional group is a base material including a carrier and a radically polymerizable polymer, the base material is preferably a base material in which the radically polymerizable polymer is physically adsorbed on at least a part of the surface, preferably the entire surface of the carrier. Such a base material can be obtained by applying a coating solution prepared by dissolving a radically polymerizable polymer in a solvent onto a carrier and then distilling off the solvent according to a known production method, for example, the method described in JP 08-231489 A.

When the radically polymerizable polymer is physically adsorbed on the surface of the carrier, the carrier is preferably surface-treated from the viewpoint of improving the durability of the carrier. For example, by introducing an aminoalkylsilyl group, the radically polymerizable polymer can be more satisfactorily physically adsorbed on the surface of the carrier, and the durability of the carrier can be improved. The aminoalkylsilyl group can be introduced into the carrier by a known method, for example, using a surface treatment agent having an aminoalkylsilyl group, such as 3-aminopropyltrimethoxysilane or 3-aminopropyltriethoxysilane.

Examples of the radically polymerizable polymer include a polysaccharide derivative having a radically polymerizable functional group. A polysaccharide derivative is known as a chiral separation selector, and thus, when a chiral stationary phase is produced, a base material including a carrier and a radically polymerizable polymer can be suitably applied as the base material having the radically polymerizable functional group.

The polysaccharide of the polysaccharide derivative having the radically polymerizable functional group is preferably amylose or cellulose. The polysaccharide derivative having the radically polymerizable functional group is preferably a polysaccharide derivative in which a part of hydroxy groups of the polysaccharide is converted into radically polymerizable functional groups. Among the hydroxy groups of the polysaccharide, the hydroxy group that is not converted into the radically polymerizable functional group may be converted into a phenyl carbamate derivative using a substituted or unsubstituted phenyl isocyanate, or may be converted into an ester derivative using an acid halide such as 4-methylbenzoyl chloride, for example.

Examples of the substituted or unsubstituted phenyl isocyanate include phenyl isocyanate, 3-chlorophenyl isocyanate, 4-chlorophenyl isocyanate, 3,5-dichlorophenyl isocyanate, 3-methylphenyl isocyanate, 4-methylphenyl isocyanate, 3,5-dimethylphenyl isocyanate, and 3-chloro-5-methylphenyl isocyanate.

Examples of the acid halide include benzoyl chloride, 4-methylbenzoyl chloride, benzoyl bromide, and 4-methylbenzoyl bromide.

The polysaccharide derivative having the radically polymerizable functional group can be produced in accordance with a known production method. Examples of the known method include the following method described in WO 03/091185.

That is, a specific procedure for producing a polysaccharide derivative having a radically polymerizable functional group includes protecting some of the hydroxy groups of a polysaccharide, modifying the unprotected hydroxy groups of the polysaccharide with substituted or unsubstituted phenyl isocyanate, deprotecting the protected hydroxy groups, and modifying the deprotected hydroxy groups with substituted or unsubstituted phenyl isocyanate and a compound having a radically polymerizable functional group.

Alternatively, modifying the hydroxy groups of the polysaccharide with substituted or unsubstituted phenyl isocyanate and introducing a radically polymerizable functional group into the polysaccharide using a compound having a radically polymerizable functional group may be performed at the same time without the above-described protection.

Examples of the compound having the radically polymerizable functional group include (meth)acryloyl chloride; an unsaturated acid halide such as 4-vinylbenzoyl chloride; and an unsaturated isocyanate such as vinylphenyl isocyanate or 2-isocyanatoethyl (meth)acrylate.

In the polysaccharide derivative having the radically polymerizable functional group, some of the hydroxy groups of the polysaccharide are converted to substituted or unsubstituted phenyl carbamate groups using a substituted or unsubstituted phenyl isocyanate, and the other hydroxy groups are converted to groups having the radically polymerizable functional group.

Examples of the protection group introduced in the protection include a known protection group such as a triphenylmethyl group (trityl group), a diphenylmethyl group, a tosyl group, a mesyl group, a trimethylsilyl group, or a dimethyl (t-butyl) silyl group. Of these, the protection group is preferably a trityl group or a trimethylsilyl group.

Examples of the carrier having the radically polymerizable functional group introduced on its surface include a carrier whose surface is treated with a silane coupling agent represented by the following Formula (I). Silica gel is preferred as the carrier. The silane coupling agent represented by the following Formula (I) can be produced according to a known production method. Examples of the known method include the method described in WO 2017/164289.

$$W\text{-}X\text{-}YSiR_{3-n}Z_n \quad (I)$$

In Formula (I), W is a radically polymerizable functional group; X is -NR'CO-, -CONR'-, - $CO_2$-, -OCO-, -O-, -$SO_2$-, -$SO_3$-, -$OSO_2$-, -S-, an arylene group having from 6 to 20 carbons, or a phosphate ester group; R' is a hydrogen atom or an alkyl group having from 1 to 3 carbons; Y is an alkylene group having from 1 to 30 carbons; each R is independently an alkyl group having from 1 to 3 carbons; each Z is independently a leaving group capable of forming a bond between the silicon atom in Formula (I) and the carrier; and n is an integer of from 1 to 3.

The radically polymerizable functional group represented by W has the same definition as the radically polymerizable functional group of the base material having the radically polymerizable functional group, and preferable embodiments thereof are also the same.

X is a part of a linker connecting W and Z, and is preferably -NR'CO-, -CONR'-, -$CO_2$-, - OCO-, or a phenylene group.

R' is preferably hydrogen or an alkyl group having from 1 to 3 carbons, and more preferably hydrogen or a methyl group.

Y is preferably an alkylene having from 1 to 5 carbons, and more preferably a methylene group, an ethylene group, or a trimethylene group.

R is preferably a methyl group or an ethyl group.

Z is not particularly limited as long as it is a group that leaves in the reaction for forming a bond between the silicon atom in Formula (I) and the carrier. Examples of Z include an alkoxy group having from 1 to 5 carbons; a halogen atom; an alkyl mercaptyl group having from 1 to 20 carbons; a nitrogen-containing group such as a dimethylamino group, a diethylamino group, a pyrrolidino group, or an imidazolyl group; an allyl group; and a 2-methyl-2-propenyl group. Of these, Z is preferably an alkoxy group having from 1 to 5 carbons, and more preferably a methoxy group or an ethoxy group, from the viewpoint of ease of handling and reactivity.
n is preferably 2 or 3, and more preferably 3.

Monomer having radically polymerizable functional group

The monomer having the radically polymerizable functional group (hereinafter, which may be referred to as "radically polymerizable monomer") used in the radical copolymerization is a compound having at least one radically polymerizable functional group.
When the base material having the radically polymerizable functional group is a base material including a carrier and a radically polymerizable polymer, the radically polymerizable monomer functions as a crosslinking agent for crosslinking the radically polymerizable polymer. In this case, it is preferable that the base material having the radically polymerizable functional group is a base material in which the radically polymerizable polymer is physically adsorbed on a part or the whole of the surface of the carrier, because the radically polymerizable polymer is crosslinked by the radically polymerizable monomer to form a three dimensional network structure, thereby being firmly immobilized on the carrier.
On the other hand, when the base material having the radically polymerizable functional group is a carrier having a radically polymerizable functional group introduced on its surface, the radically polymerizable monomer forms a polymer by radical copolymerization with the carrier having the radically polymerizable functional group introduced on its surface, whereby the polymer is immobilized on the carrier.
The radically polymerizable functional group of the radically polymerizable monomer has the same definition as the radically polymerizable functional group of the base material having the radically polymerizable functional group, and preferable embodiments thereof are also the same. The radically polymerizable functional group of the radically polymerizable monomer and the radically polymerizable functional group of the base material having the radically polymerizable functional group may be the same group or may be different groups.
One type of the radically polymerizable monomer may be used alone, or a freely chosen combination and ratio of two or more types of the radically polymerizable monomers may be used.
Since the radical copolymerization is performed in a heterogeneous system including a phase of the radically polymerizable monomer and a phase of a solvent, the radically polymerizable monomer is appropriately selected from radically polymerizable monomers that are phase separatable from the solvent to be used. The radically polymerizable monomer is preferably combined with a solvent to form a heterogeneous system (A) or (B) as follows, for example.

- Heterogeneous system (A)

  Radically polymerizable monomer: lipophilic monomer
  Solvent: aqueous solvent

- Heterogeneous system (B)

  Radically polymerizable monomer: hydrophilic monomer
  Solvent: lipophilic solvent

Hereinafter, the lipophilic monomer in the heterogeneous system (A) and the hydrophilic monomer in the heterogeneous system (B) will be described.
The "lipophilic monomer" in the heterogeneous system (A) refers to a radically polymerizable monomer having a water/1-octanol partition coefficient (logPow) of 1.0 or more, and the upper limit of the water/1-octanol partition coefficient is preferably 5.0 or less. The solubility of the lipophilic monomer in water at 20°C is preferably 3.0 g/100 mL or less, more preferably 1.0 g/100 mL or less, and still more preferably 0.1 g/100 mL or less.
Examples of the lipophilic monomer include butadiene, 2,3-dimethyl-1,3-butadiene, 2-methyl-1,3-butadiene, divinylbenzene, allyl (meth)acrylate, and styrene. The lipophilic monomer is preferably butadiene, 2,3-dimethyl-1,3-butadiene, or 2-methyl-1,3-butadiene, and more preferably 2,3-dimethyl-1,3-butadiene.
The lipophilic monomers described above are suitable when the radical copolymerization is performed in the heterogeneous system (A) using the base material including the carrier and the radically polymerizable polymer.
Alternatively, it is preferable to use, as the lipophilic monomer, a monomer that forms a polymer having a

molecular recognition ability (that is, a separating agent), for example, a basic polymer through polymerization because the molecular recognition ability can be imparted to the stationary phase.

Specific examples of such a lipophilic monomer include 2-vinylpyridine, 3-vinylpyridine, 4-vinylpyridine, 9-vinylcarbazole, 2-isopropenylpyridine, 3-isopropenylpyridine, 4-isopropenylpyridine, and 9-isopropenylcarbazole, and 4-vinylpyridine is preferable. The hetero ring of these monomers may have a substituent. Examples of the substituent include an alkyl group having from 1 to 12 carbons, an alkoxy group having from 1 to 12 carbons, a cyano group, a halogen atom, a hydroxy group, an amino group, and a nitro group. Of these, the substituent is preferably a methyl group or a halogen atom from the viewpoint that the molecular recognition ability of the basic polymer can be improved and thus the separation performance of the stationary phase can be improved.

The lipophilic monomers described above are suitable when the radical copolymerization is performed in the heterogeneous system (A) using a carrier having a radically polymerizable functional group introduced on its surface.

When the polymer having molecular recognition ability is formed through radical copolymerization, any lipophilic monomer such as styrene, $\alpha$-methylstyrene, a (meth)acrylic acid derivative, or a (meth)acrylamide derivative may be used in addition to the lipophilic monomer as long as it does not inhibit the molecular recognition ability of the stationary phase.

The "hydrophilic monomer" in the heterogeneous system (B) refers to a radically polymerizable monomer having a water/1-octanol partition coefficient (logPow) of less than 1.0, and the lower limit of the water/1-octanol partition coefficient is preferably -10.0 or more. The solubility of the hydrophilic monomer in the lipophilic solvent at 20°C is preferably 3.0 g/100 mL or less, more preferably 1.0 g/100 mL or less, and still more preferably 0.1 g/100 mL or less.

Examples of the hydrophilic monomer include 2-((meth)acryloyloxy)ethyl-2'-(trimethylammonio)ethyl phosphate, 2-(N-3-sulfopropyl-N,N-dimethylammonium)ethyl methacrylate, 3-(methacryloylamino)propyltrimethylammonium chloride, potassium 3-(methacryloyloxy)propanesulfonate, 2-hydroxyethyl methacrylate, and acrylamide.

The hydrophilic monomers described above are suitable when the radical copolymerization is performed in the heterogeneous system (B) using a carrier having a radically polymerizable functional group introduced on its surface.

The weight-average molecular weight (Mw) of the polymer produced by radical copolymerization of the radically polymerizable monomer and the carrier whose surface is modified with the radically polymerizable functional group is not particularly limited, and is usually from 1000 to 5000000. The weight-average molecular weight of the polymer refers to a weight-average molecular weight of a moiety having a repeating unit derived from the radically polymerizable functional group of the radically polymerizable monomer. Since the formation of the polymer and the immobilization of the polymer on the carrier occur at the same time, the weight-average molecular weight of the polymer is determined by estimation from the supernatant of the reaction mixture after the radical copolymerization reaction; or by measuring the molecular weight of the polymer obtained by breaking the covalent bond with the carrier polymer, and the weight-average molecular weight of the polymer determined by at least one of these methods should be within the above range.

Solvent

In the present disclosure, the solvent used in the radical copolymerization is not particularly limited as long as it does not completely dissolve the monomer and allows the reaction system to be a heterogeneous system including a phase of the monomer having the radically polymerizable functional group and a phase of the solvent, and is preferably an aqueous solvent or a lipophilic solvent constituting the heterogeneous system (A) or (B).

The "aqueous solvent" in a case where the heterogeneous system is the heterogeneous system (A) is a solvent containing water, and refers to water or a mixed solvent of water and a water-soluble solvent. When a mixed solvent of water and a water-soluble solvent is used as the aqueous solvent, the amount of the water-soluble solvent to be mixed with 100 parts by volume of water is usually 10 parts by volume or more, preferably 50 parts by volume or more, and more preferably 100 parts by volume or more, and usually 300 parts by volume or less, preferably 200 parts by volume or less, and more preferably 150 parts by volume or less. Thus, preferable ranges of the amount of the water-soluble solvent to be mixed with 100 parts by volume of water include, for example, from 10 parts by volume to 200 parts by volume, from 50 parts by volume to 300 parts by volume, and from 100 parts by volume to 150 parts by volume.

As the water contained in the aqueous solvent, ion-exchanged water, tap water, distilled water, or the like may be used. Examples of the water-soluble solvent contained in the aqueous solvent include an alkyl alcohol having from 1 to 6 carbons such as methanol, ethanol, n-propanol, isopropanol, n-butanol, sec-butanol, isobutanol, tert-butanol, n-pentanol, neopentyl alcohol, or n-hexanol; a glycol such as ethylene glycol, 1,2-propylene glycol, 1,3-propylene glycol, 1,2-butylene glycol, 1,3-butylene glycol, 1,4-butylene glycol, 2,3-butylene glycol, 1,2-pentanediol, 1,4-pentanediol, 1,5-pentanediol, 2,4-pentanediol, 1,6-hexanediol, or dipropylene glycol; and an alkylene carbonate such as ethylene carbonate or propylene carbonate. The water-soluble solvent is preferably an alkyl alcohol having from 1 to 6 carbons, more preferably an alkyl alcohol having from 1 to 4 carbons, and still more preferably ethanol. Using these water-soluble solvents makes it possible to favorably immobilize the crosslinked product or polymer produced through radical polymerization on the carrier.

When the heterogeneous system is the heterogeneous system (B), the "lipophilic solvent" refers to a solvent having a water/1-octanol partition coefficient (logPow) of 0.5 or more, and the upper limit of the water/1-octanol partition coefficient (logPow) is preferably 5.0 or less.

Specific preferable examples of the lipophilic solvent include a hydrocarbon solvent such as n-hexane, n-heptane, n-octane, isooctane, cyclohexane, methylcyclohexane, benzene, toluene, or xylene; and an ether solvent such as tert-butyl methyl ether or diisopropyl ether.

Radical Initiator

The radical initiator used in the radical copolymerization is not particularly limited, and can be appropriately selected from known radical initiators according to the type of the radically polymerizable base material, the type of the radically polymerizable monomer, the reaction conditions, and the like. Examples of the known radical initiator include a thermal radical initiator and a photoradical initiator, and a thermal radical initiator is preferable.

Examples of the thermal radical initiator include an organic peroxide such as benzoyl peroxide, methyl ethyl ketone peroxide, tert-butyl hydroperoxide, tert-butyl peroxybenzoate, dicumyl peroxide, cumene hydroxyperoxide, or lauroyl peroxide; and an azo-based compound such as 2,2'-azobis[2-(2-imidazolin-2-yl) propane]dihydrochloride, 2,2'-azobis(isobutyronitrile), or 2,2'-azobis(2,4-dimethylvaleronitrile). Of these, the thermal radical initiator is preferably an azo-based compound.

One type of the thermal radical initiator may be used alone, or a freely chosen combination and ratio of two or more types of the thermal radical initiators may be used.

Examples of the photoradical initiator include acetophenone, benzophenone, benzoin, benzyl, benzoylbenzoic acid, methyl-2-benzoylbenzoate, 2-ethylanthraquinone, thioxanthone, and 2-isopropylthioxanthone.

One type of the photoradical initiator may be used alone, or a freely chosen combination and ratio of two or more types of the photoradical initiators may be used.

The use amount of the radical initiator is not particularly limited and is usually 0.1 parts by mass or more, preferably 0.2 parts by mass or more, more preferably 0.3 parts by mass or more, and usually 25.0 parts by mass or less, preferably 5.0 parts by mass or less, more preferably 3.0 parts by mass or less, with respect to 100 parts by mass of the radically polymerizable monomer. Thus, preferable ranges of the use amount of the radical initiator with respect to 100 parts by mass of the radically polymerizable monomer include, for example, from 0.1 parts by mass to 5.0 parts by mass, from 0.2 parts by mass to 25.0 parts by mass, and from 0.3 parts by mass to 3.0 parts by mass. Setting the use amount of the radical initiator within the above range makes it possible to promote the radical copolymerization reaction of the radically polymerizable monomer and obtain a stationary phase with a higher immobilization percentage of the resulting crosslinked product or polymer (that is, separating agent) on the carrier.

In the present specification, the use amount of each component refers to the total amount when two or more of the components are used.

Reaction Condition of Radical Copolymerization

The radical copolymerization method is not particularly limited, and examples thereof include a method in which a reaction solution containing the radically polymerizable base material, the radically polymerizable monomer, the radical initiator, and the solvent is heated or irradiated with active energy rays while being stirred in a reactor equipped with a stirrer or a stirring blade.

When the radical polymerization is thermal radical polymerization using a thermal radical initiator, the reaction temperature and the reaction time can be appropriately selected depending on the type of the radically polymerizable monomer, the use amount of the radically polymerizable monomer, the type of the solvent, and the like. The reaction temperature is usually 40°C or higher, and preferably 50°C or higher, and is usually 100°C or less, preferably 80°C or less, and more preferably 70°C or less. Thus, preferable ranges of the reaction temperature include, for example, from 40°C to 80°C, preferably from 50°C to 100°C, and from 50°C to 70°C. The reaction time is usually 1 hour or more, preferably 5 hours or more, more preferably 20 hours or more, and usually 60 hours or less, preferably 48 hours or less. Thus, preferable ranges of the reaction time include, for example, a range of from 1 hour to 48 hours, a range of from 5 hours to 60 hours, and a range of from 20 hours to 48 hours.

When the radical polymerization is photoradical polymerization using a photoradical initiator, the cumulative irradiation amount (cumulative light amount) of the active energy rays for irradiation can be appropriately selected depending on the type of the radically polymerizable monomer, the use amount of the radically polymerizable monomer, the type of the active energy rays, the irradiation time, and the like. Examples of the active energy rays include visible light, ultraviolet rays, X-rays, and electron beams. The cumulative light amount is usually 100 $mJ/cm^2$ or more, preferably 300 $mJ/cm^2$ or more, more preferably 500 $mJ/cm^2$ or more, and usually 5000 $mJ/cm^2$ or less, preferably 4000 $mJ/cm^2$ or less, more preferably 3000 $mJ/cm^2$ or less. Thus, preferable ranges of the cumulative light amount include, for example,

ranges of from 100 mJ/cm$^2$ to 4000 mJ/cm$^2$, from 300 mJ/cm$^2$ to 5000 mJ/cm$^2$, and from 500 mJ/cm$^2$ to 3000 mJ/cm$^2$. Setting the cumulative light amount within the above range makes it possible to sufficiently generate active species derived from the photoradical initiator and improve the radical polymerization efficiency. The cumulative light amount means an irradiation amount represented by the product of the irradiation intensity and the irradiation time of the active energy ray.

Evaluation Method of Separation Performance of Stationary Phase and Immobilization Percentage of Separating Agent

As an index for evaluating the separation performance of the stationary phase, a retention coefficient (k') and/or a separation coefficient ($\alpha$) can be used. The retention coefficient and the separation coefficient are determined by, for example, filling a column with a stationary phase, separating a sample by column chromatography, and performing calculation based on the following Equations (1) to (3). It can be determined that a larger value of one or both of the retention coefficient and the separation coefficient indicates a higher separation performance.

- $$\text{Retention coefficient } k1' = (t1 - t0)/t0 \ (1)$$
- $$\text{Retention coefficient } k2' = (t2 - t0)/t0 \ (2)$$
- $$\text{Separation coefficient } \alpha = k2'/k1' \ (3)$$

k1': Retention coefficient of the more weakly retained component
k2': Retention coefficient of the more weakly retained component
t0: Dead time (time from introduction of a material that does not interact with the stationary phase into the column to elution of the material. For convenience, the elution time of tri-tert-butylbenzene is used as the dead time.)
11: Elution time of the more weakly retained component
t2: Elution time of the more strongly retained component

In addition, in the present embodiment, when the stationary phase is a chiral stationary phase, the immobilization percentage (%) of the separating agent on the carrier in the stationary phase is determined by the following equation.

Immobilization percentage = ((retention coefficient k1' of stationary phase)/(retention coefficient k1' of base material having radically polymerizable functional group)) $\times$ 100

The closer the immobilization percentage is to 100%, the better the separating agent is immobilized on the carrier. In the stationary phase obtained by the production method according to the present embodiment, the immobilization percentage is usually 50% or more, preferably 60% or more, more preferably 70% or more, and still more preferably 80% or more. The upper limit of the immobilization percentage is not particularly limited, and is usually 100% or less, and may be 95% or less. Thus, preferable ranges of the immobilization percentage include, for example, ranges of from 50% to 95%, from 60% to 100%, from 70% to 95%, and from 80% to 95%.

As in the case of the retention coefficient k1' of the stationary phase, the retention coefficient k1' of the base material having the radically polymerizable functional group is determined by filling a column with the base material having the radically polymerizable functional group, separating a sample by column chromatography, and performing calculation according to Equation (1).

On the other hand, when the stationary phase is an achiral stationary phase, the immobilization percentage of the separating agent on the carrier in the stationary phase is evaluated by the retention coefficient k1' of the stationary phase. A larger value of the retention coefficient k1' of the stationary phase indicates a higher immobilization percentage of the separating agent on the carrier.

Application of Stationary Phase for Chromatography

The stationary phase for chromatography obtained by the production method according to the present embodiment can be used for various types of column chromatography, such as high performance liquid chromatography (HPLC), supercritical fluid chromatography (SFC), and ion exchange chromatography (IEC).

Examples

Hereinafter, the present disclosure will be described more specifically with reference to examples, but the present disclosure is not limited to the following examples as long as there is not deviation from the gist of the present invention.

First Example

Surface Treatment of Silica Particles

Anhydrous toluene in an amount of 48 mL and 4 mL of anhydrous pyridine were added to 40 g of silica gel (average particle size 5 μm) activated by vacuum drying at 180°C for 2 hours, and then 2.8 mL of 3-aminopropyltriethoxysilane was added thereto, followed by refluxing for 12 hours. Thereafter, the reaction solution was filtered through a glass filter to obtain silica particles having aminopropyl groups introduced on surfaces thereof (hereinafter referred to as "aminopropyl-modified silica particles").

Production of Radically Polymerizable Polymer

Amylose in an amount of 5.0 g was dissolved in a mixture solution of 4.4 g of lithium chloride and 65 mL of N,N-dimethylacetamide, then mixed with 25 mL of pyridine and 17.2 g of trityl chloride and reacted at 85°C for 12 hours to protect the hydroxy group at the 6-position of amylose. Then, 18.3 g of 3-chloro-5-methylphenyl isocyanate was added to the reaction mixture solution, and the obtained material was further reacted at 85°C for 12 hours. The reaction mixture solution thus obtained was added dropwise to methanol, and the precipitated insoluble matter was collected. The total amount of the collected product was dispersed in a methanol/12N hydrochloride (667 mL/19 mL) mixture solution, and the resulting material was stirred for 12 hours to deprotect the trityl group at the 6-position of amylose, whereby a carbamate derivative of amylose was obtained. The carbamate derivative of amylose was dried under vacuum before use in the next step.

The carbamate derivative of amylose in an amount of 5.0 g was dissolved in 35 mL of pyridine, then mixed with 0.17 g of 3-chloro-5-methylphenyl isocyanate and reacted at 85°C for 2 hours to convert some of the hydroxy groups of the carbamate derivative of amylose into 3-chloro-5-methylphenyl carbamate groups. Then, 0.16 g of 2-isocyanatoethyl methacrylate was added to the reaction mixture solution and reacted at 85°C for 13 hours. Subsequently, 2.03 g of 3-chloro-5-methylphenyl isocyanate was added to the reaction mixture solution and reacted at 85°C for 7 hours to convert the remaining hydroxy groups of amylose into carbamate. The reaction mixture solution thus obtained was added dropwise to methanol, and the precipitated insoluble matter was collected and dried under vacuum to obtain an amylose derivative having a methacryloyl group (hereinafter referred to as "methacryloyl group-containing amylose derivative A").

Production of Radically Polymerizable Polymer-Coated Silica Particles

The methacryloyl group-containing amylose derivative A in an amount of 2.0 g was dissolved in 16 mL of ethyl acetate to obtain a coating solution. The coating solution was uniformly applied to 5.4 g of the aminopropyl-modified silica particles, and then ethyl acetate was distilled off to obtain aminopropyl-modified silica particles having a methacryloyl group-containing amylose derivative physically adsorbed on surfaces thereof (hereinafter, referred to as methacryloyl group-containing amylose derivative-coated silica particles A").

Radical Copolymerization

Under a nitrogen atmosphere, 12 mL of ethanol and 12 mL of distilled water were added to 3.0 g of the methacryloyl group-containing amylose derivative-coated silica particles A, 6 mL of a 0.30 mol/L 2,2'-azobis[2-(2-imidazolin-2-yl)propane]dihydrochloride aqueous solution and 6 mL of a 1.48 mol/L 2,3-dimethyl-1,3-butadiene solution in ethanol were further added, and a radical copolymerization reaction was performed at 55°C for 24 hours. Thereafter, the product was washed with ethyl acetate and methanol to obtain a chiral stationary phase in which a crosslinked product of the methacryloyl group-containing amylose derivative A was immobilized on a carrier.

Example 2

Production of Radically Polymerizable Polymer

Cellulose in an amount of 5.0 g was dispersed in 171 mL of pyridine, and 80 mL of pyridine was dehydrated

by azeotropic distillation to obtain a dispersion. To this dispersion, 7.2 g of 4-methylbenzoyl chloride was added, and the mixture was reacted at 80°C for 4 hours. Then, 0.80 g of 1,4-benzoquinone and 0.72 g of 2-isocyanatoethyl methacrylate were added to the reaction mixture solution and reacted at 80°C for 13 hours, then 20.7 g of 4-methylbenzoyl chloride was added and further reacted at 80°C for 5 hours. The reaction mixture solution thus obtained was added dropwise to methanol, and the precipitated insoluble matter was collected. The collected product was dissolved in dichloromethane, and the obtained solution was added dropwise into methanol. The precipitated insoluble matter was collected and dried under vacuum at room temperature to obtain a cellulose derivative having a methacryloyl group (hereinafter referred to as "methacryloyl group-containing cellulose derivative A").

Production of Radically Polymerizable Polymer-Coated Silica Particles

The methacryloyl group-containing cellulose derivative A in an amount of 10.0 g was dissolved in 30 mL of dichloromethane to obtain a coating solution. The coating solution was uniformly applied to 40.0 g of the aminopropyl-modified silica particles obtained in Example 1, and then dichloromethane was distilled off to obtain aminopropyl-modified silica particles having the methacryloyl group-containing cellulose derivative A physically adsorbed on surfaces thereof (hereinafter referred to as "methacryloyl group-containing cellulose derivative-coated silica particles A").

Radical Copolymerization

Under a nitrogen atmosphere, 12 mL of ethanol and 12 mL of distilled water were added to 3.0 g of the methacryloyl group-containing cellulose derivative-coated silica particles A, and 6 mL of a 0.22 mol/L 2,2'-azobis[2-(2-imidazolin-2-yl)propane]dihydrochloride aqueous solution and 6 mL of a 1.83 mol/L 2,3-dimethyl-1,3-butadiene solution in ethanol were further added to obtain a reaction solution. The reaction solution was stirred at 60°C for 24 hours to perform a radical copolymerization reaction, whereby a chiral stationary phase in which a crosslinked product of the methacryloyl group-containing cellulose derivative A was immobilized on a carrier was obtained.

Example 3

Production of Radically Polymerizable Polymer

Cellulose in an amount of 3.0 g was dispersed in 124 mL of pyridine to obtain a dispersion. To this dispersion, 4.1 g of 3,5-dimethylphenyl isocyanate was added, and the mixture was reacted at 80°C for 4 hours. Then, 0.59 g of 1,4-benzoquinone and 0.29 g of 2-isocyanatoethyl methacrylate were added and reacted at 80°C for 13 hours, then 12.3 g of 3,5-dimethylphenyl isocyanate was added and further reacted at 80°C for 5 hours. The reaction mixture solution thus obtained was added dropwise to methanol, and the precipitated insoluble matter was collected. The collected product was dissolved in tetrahydrofuran, and the obtained solution was added dropwise to methanol. The precipitated insoluble matter was collected and dried under vacuum at room temperature to obtain a cellulose derivative having a methacryloyl group (hereinafter referred to as "methacryloyl group-containing cellulose derivative B").

Production of Radically Polymerizable Polymer-Coated Silica Particles

The methacryloyl group-containing cellulose derivative B in an amount of 2.0 g was dissolved in 16 mL of acetone to obtain a coating solution. The coating solution was uniformly applied to 5.4 g of the aminopropyl-modified silica particles obtained in Example 1, and then acetone was distilled off to obtain aminopropyl-modified silica particles having the methacryloyl group-containing cellulose derivative B physically adsorbed on surfaces thereof (hereinafter referred to as "methacryloyl group-containing cellulose derivative-coated silica particles B").

Radical Copolymerization

Under a nitrogen atmosphere, 12 mL of ethanol and 12 mL of distilled water were added to 3.0 g of the methacryloyl group-containing cellulose derivative-coated silica particles B, and 6 mL of a 0.28 mol/L 2,2'-azobis[2-(2-imidazolin-2-yl)propane]dihydrochloride aqueous solution and 6 mL of a 1.47 mol/L 2,3-dimethyl-1,3-butadiene solution in ethanol were further added to obtain a reaction solution. The reaction solution was stirred at 55°C for 24 hours to perform a radical copolymerization reaction, whereby a chiral stationary phase in which a crosslinked product of the methacryloyl group-containing cellulose derivative B was immobilized on a carrier was obtained.

Example 4

Production of Radically Polymerizable Polymer

Cellulose in an amount of 3.0 g was dispersed in 124 mL of pyridine to obtain a dispersion. To this dispersion, 5.2 g of 3,5-dichlorophenyl isocyanate was added, and the mixture was reacted at 80°C for 4 hours. Then, 0.59 g of 1,4-benzoquinone and 0.29 g of 2-isocyanatoethyl methacrylate were added and reacted at 80°C for 13 hours, and then 15.7 g of 3,5-dichlorophenyl isocyanate was added and further reacted at 80°C for 5 hours. The reaction mixture solution thus obtained was added dropwise to methanol, and the precipitated insoluble matter was collected. The collected product was redissolved in tetrahydrofuran, and the obtained solution was added dropwise to methanol. The precipitated insoluble matter was collected and dried under vacuum at room temperature to obtain a cellulose derivative having a methacryloyl group (hereinafter referred to as "methacryloyl group-containing cellulose derivative C").

Production of Radically Polymerizable Polymer-Coated Silica Particles

The methacryloyl group-containing cellulose derivative C in an amount of 3.7 g was dissolved in 30 mL of ethyl acetate to obtain a coating solution. The coating solution was uniformly applied to 10.0 g of the aminopropyl-modified silica particles obtained in Example 1, and then ethyl acetate was distilled off to obtain aminopropyl-modified silica particles having the methacryloyl group-containing cellulose derivative C physically adsorbed on surfaces thereof (hereinafter referred to as "methacryloyl group-containing cellulose derivative-coated silica particles C").

Radical Copolymerization

Under a nitrogen atmosphere, 12 mL of ethanol and 12 mL of distilled water were added to 3.0 g of the methacryloyl group-containing cellulose derivative-coated silica particles C, and 6 mL of a 0.30 mol/L 2,2'-azobis[2-(2-imidazolin-2-yl)propane]dihydrochloride aqueous solution and 6 mL of a 1.48 mol/L 2,3-dimethyl-1,3-butadiene solution in ethanol were further added to obtain a reaction solution. The reaction solution was stirred at 55°C for 24 hours to perform a radical copolymerization reaction, whereby a chiral filler in which a crosslinked product of the methacryloyl group-containing cellulose derivative C was immobilized on a carrier was obtained.

Example 5

Production of Silane Coupling Agent

4-Pyrrolidinopyridine in an amount of 5.26 g was added to a flask, degassed, and then purged with nitrogen. Under a nitrogen atmosphere, 3500 mL of toluene, 138.6 g of N-methylaminopropyltrimethoxysilane, and 203 mL of triethylamine were added to the flask in this order. Thereafter, a solution (175 mL) of 84.23 g of acryloyl chloride in toluene was added to the obtained mixture under a nitrogen atmosphere, and the mixture was heated at 60°C for 1.5 hours to obtain a crude product of N-methyl-N-[3-(trimethoxysilyl)propyl]2-propenamide.

Surface Treatment of Silica Particles

The crude product of N-methyl-N-[3-(trimethoxysilyl)propyl]2-propenamide was filtered, and the filtrate was mixed with 700 g of silica gel (average particle size 5 μm). The silica gel had been activated by vacuum drying at 80°C for 8 hours in advance. The resulting mixture solution was heated to reflux for 3 hours and then cooled to room temperature. The product was subjected to vacuum drying at 80°C for 8 hours to obtain silica particles having an acrylamide group introduced on its surface (hereinafter referred to as "acrylamide-modified silica particles").

Radical Copolymerization

Under a nitrogen atmosphere, 18 mL of ethanol and 18 mL of distilled water were added to 10.0 g of the acrylamide-modified silica particles, and 9 mL of a 0.15 mol/L 2,2'-azobis[2-(2-imidazolin-2-yl)propane]dihydrochloride aqueous solution and 9 mL of a 3.0 mol/L styrene solution in ethanol were further added to obtain a reaction solution. The reaction solution was stirred at 55°C for 24 hours to perform a radical copolymerization reaction, whereby a stationary phase in which polystyrene was immobilized on a carrier was obtained.

Example 6

Radical Copolymerization

Under a nitrogen atmosphere, 18 mL of ethanol and 18 mL of distilled water were added to 10.0 g of the acrylamide-modified silica particles obtained in Example 5, and 9 mL of a 0.15 mol/L 2,2'-azobis[2-(2-imidazolin-2-yl)propane] dihydrochloride aqueous solution and 9 mL of a 3.0 mol/L 4-vinylpyridine solution in ethanol were further added to obtain a reaction solution. The reaction solution was stirred at 55°C for 24 hours to perform a radical copolymerization reaction, whereby a stationary phase in which poly(4-vinylpyridine) was immobilized on a carrier was obtained.

Comparative Example 1

Production of Radically Polymerizable Polymer-Coated Silica Particles

The methacryloyl group-containing amylose derivative obtained in Example 1 in an amount of 1.5 g was dissolved in 9.0 mL of ethyl acetate to obtain a coating solution. The coating solution was uniformly applied to 6.0 g of the aminopropyl-modified silica particles obtained in Example 1, and then ethyl acetate was distilled off to obtain aminopropyl-modified silica particles having the methacryloyl group-containing amylose derivative physically adsorbed on surfaces thereof (hereinafter referred to as "methacryloyl group-containing amylose derivative-coated silica particles B").

Radical Copolymerization

Under a nitrogen atmosphere, 10 mL of a 0.002 mol/L 2,2'-azobis(isobutyronitrile) solution in hexane and 0.07 g of 2,3-dimethyl-1,3-butadiene were added to 2.5 g of the methacryloyl group-containing amylose derivative-coated silica particles B, and a copolymerization reaction was performed at 60°C for 20 hours. Thereafter, the product was washed with ethyl acetate and methanol to obtain a chiral stationary phase in which a crosslinked product of the methacryloyl group-containing amylose derivative B was immobilized on a carrier.

Comparative Example 2

Production of Radically Polymerizable Polymer

Cellulose in an amount of 5.0 g was dispersed in 126 mL of pyridine to obtain a dispersion. To this dispersion, 7.2 g of 4-methylbenzoyl chloride was added, and the mixture was reacted at 80°C for 4 hours. Then, 0.72 g of 2-isocyanatoethyl methacrylate was added to the reaction mixture solution, and the mixture was reacted at 80°C for 13 hours. Subsequently, 20.7 g of 4-methylbenzoyl chloride was added thereto, and the mixture was further reacted at 80°C for 5 hours. The reaction mixture solution thus obtained was added dropwise to methanol, and the precipitated insoluble matter was collected. The collected product was dissolved in dichloromethane, and the obtained solution was added dropwise into methanol. The precipitated insoluble matter was collected and dried under vacuum at room temperature to obtain a cellulose derivative having a methacryloyl group (hereinafter referred to as "methacryloyl group-containing cellulose derivative D").

Production of Radically Polymerizable Polymer-Coated Silica Particles

The methacryloyl group-containing cellulose derivative D in an amount of 6.0 g was dissolved in 48 mL of dichloromethane to obtain a coating solution. The coating solution was uniformly applied to 24.0 g of the aminopropyl-modified silica particles obtained in Example 1, and then dichloromethane was distilled off to obtain aminopropyl-modified silica particles having the methacryloyl group-containing cellulose derivative D physically adsorbed on surfaces thereof (hereinafter referred to as "methacryloyl group-containing cellulose derivative-coated silica particles D").

Radical Copolymerization

Under a nitrogen atmosphere, 36 mL of toluene was added to 3.0 g of the methacryloyl group-containing cellulose derivative-coated silica particles D, and 0.45 g of 2,2'-azobis(isobutyronitrile) and 0.88 g of 2,3-dimethyl-1,3-butadiene were further added to obtain a reaction solution. The reaction solution was stirred at 80°C for 4 hours to perform a radical copolymerization reaction, whereby a chiral filler in which a crosslinked product of the methacryloyl group-containing cellulose derivative D was immobilized on a carrier was obtained.

Comparative Example 3

Under a nitrogen atmosphere, 54 mL of N,N-dimethylformamide was added to 10.0 g of the acrylamide-modified silica particles obtained in Example 5, and 9 mL of a 0.15 mol/L 2,2'-azobis(2,4-dimethylvaleronitrile) solution in N,N-dimethylformamide and 9 mL of a 3.0 mol/L styrene solution in N,N-dimethylformamide were further added to obtain a reaction solution. The reaction solution was stirred at 60°C for 24 hours to perform a radical copolymerization reaction, whereby a stationary phase in which polystyrene was immobilized on a carrier was obtained.

Evaluation I of Separation Performance

A stainless steel column having a diameter of 0.46 cm and a length of 15 cm was filled with each chiral stationary phase produced in Examples 1 to 4 and Comparative Examples 1 and 2 by a slurry method to obtain a chiral column. This chiral column was attached to a liquid chromatography (HPLC) apparatus, a separation test of the following Racemates 1 to 4 was performed, and the separation coefficient $\alpha$ was determined based on the above Formulas (1) to (3). The results are presented in Table 1.

The separation conditions in HPLC were as follows.

Mobile phase: n-hexane/2-propanol = 90/10 (v/v)
Flow rate: 1.0 ml/min
Column temperature: 25°C
Detection wavelength: 254 nm (Compounds 1 to 3) 220 nm (Compound 4)

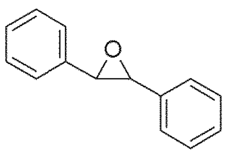
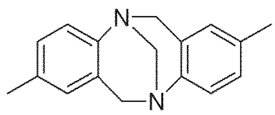
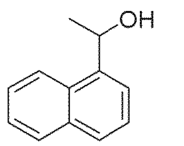
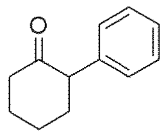

1 2 3 4

Table 1: Separation coefficient $\alpha$

| | Example 1 | Example 2 | Example 3 | Example 4 | Comparative Example 1 | Comparative Example 2 |
|---|---|---|---|---|---|---|
| Racemate 1 | 1.68 | 1.35 | 1.53 | 1.63 | 1.55 | 1.30 |
| Racemate 2 | 1.49 | 8.01 | 1.45 | 1.46 | 1.43 | 3.97 |
| Racemate 3 | 1.04 | 1.62 | 1.54 | 1.25 | 1.00 | 1.42 |
| Racemate 4 | 1.00 | 1.30 | 1.22 | 1.24 | 1.00 | 1.24 |

From the results presented in Table 1, it can be seen that the chiral stationary phases (Examples 1 to 3) in which a polysaccharide derivative is immobilized on a carrier by a radical copolymerization reaction in a heterogeneous system in which a radically polymerizable monomer is not completely dissolved in a reaction solution exhibited separation performance equal to or higher than that of the chiral stationary phases (Comparative Examples 1 and 2) obtained by a radical copolymerization reaction in a reaction system in which a radically polymerizable monomer is dissolved in a reaction solution.

In particular, it was confirmed that the chiral stationary phases obtained in Examples 1, 3, and 4 exhibited high separation performance for Racemate 1, and the chiral stationary phase obtained in Example 2 exhibited high separation performance for Racemates 2 to 4.

Evaluation of Immobilization Percentage of Polysaccharide Derivative

A stainless steel column having a diameter of 0.46 cm and a length of 15 cm was filled with each base material having a radically polymerizable functional group (specifically, methacryloyl group-containing amylose derivative-coated silica particles A, methacryloyl group-containing cellulose derivative-coated silica particles A, methacryloyl group-containing cellulose derivative-coated silica particles B, methacryloyl group-containing amylose derivative-coated silica

particles B, and methacryloyl group-containing cellulose derivative-coated silica particles D) in the production of the chiral stationary phases of Examples 1 to 3 and Comparative Examples 1 to 2 by a slurry method to obtain a chiral column. This chiral column was attached to a liquid chromatography (HPLC) apparatus, and a separation test for Racemate 1 was performed in the same manner as in the "Evaluation I of Separation Performance" to determine k1'.

The value obtained by dividing k1' of the chiral stationary phase obtained in each Example and Comparative Example by k1' of the base material having the radically polymerizable functional group and further multiplying the resulting value by 100 was determined as the immobilization percentage (%) of the polysaccharide derivative. For example, the immobilization percentage of the polysaccharide derivative in the chiral stationary phase of Example 1 is calculated by ((k1' of chiral stationary phase of Example 1)/(k1' of methacryloyl group-containing amylose derivative-coated silica particles A)) $\times$ 100. The closer the immobilization percentage of the polysaccharide derivative is to 100%, the higher the proportion of the polysaccharide derivative immobilized on the carrier. The calculated immobilization percentage of the polysaccharide derivative is presented in Table 2.

Table 2

| | Example 1 | Example 2 | Example 3 | Comparative Example 1 | Comparative Example 2 |
|---|---|---|---|---|---|
| Racemate 11 | 63% | 67% | 87% | 21% | 13% |

From the results in Table 2, it is found that the chiral stationary phases (Examples 1 to 3) in which the polysaccharide derivative is immobilized on the carrier by the radical copolymerization reaction in the heterogeneous system in which the radically polymerizable monomer is not completely dissolved in the reaction solution has a higher immobilization percentage of the polysaccharide derivative than the chiral stationary phases (Comparative Examples 1 and 2) obtained by the radical copolymerization reaction in the reaction system in which the radically polymerizable monomer is dissolved in the reaction solution.

Evaluation II of Separation Performance

A stainless steel column having a diameter of 0.46 cm and a length of 15 cm was filled with each stationary phase produced in Examples 5 and 6 and Comparative Example 3 by a slurry method to obtain a column. This column was attached to a supercritical fluid chromatography (SFC) apparatus, a separation test of a mixture of equal amounts of Compound 5 and Compound 6 shown below was performed, and the retention coefficient and the separation coefficient of the stationary phase were determined based on the above Formulas (1) to (3). The results are presented in Table 3.

The separation conditions in SFC were as follows.

Mobile phase: $CO_2$/methanol = 97/3 (v/v)
Flow rate: 4.0 ml/min
Column temperature: 40°C
Detection wavelength: 230 nm

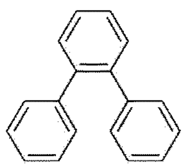

5

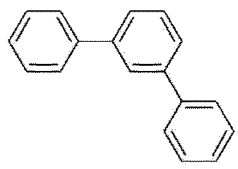

6

Table 3

| | Example 5 | Example 6 | Comparative Example 3 |
|---|---|---|---|
| k1' | 1.39 | 0.31 | 0.16 |
| $\alpha$ | 2.12 | 3.12 | 2.42 |

From the results in Table 3, it is found that the value of k1' in supercritical fluid chromatography is larger in the stationary phase obtained by a radical copolymerization reaction in a heterogeneous system in which the radically

polymerizable monomer is not completely dissolved in the reaction solution than in the stationary phase obtained by a radical copolymerization reaction in a reaction system in which the radically polymerizable monomer is dissolved in the reaction solution (Comparative Example 3). From this, it was found that the heterogeneous system led to a larger degree of polymerization of the produced polymer, and the produced polymer was more favorably immobilized on a carrier.

From Tables 1 and 3, it was confirmed that the method for producing a stationary phase for chromatography according to the present disclosure can be applied not only to the production of a chiral stationary phase but also to the production of an achiral stationary phase. It was also confirmed that the stationary phase for chromatography produced by the production method according to the present disclosure can be used as both a stationary phase for liquid chromatography and a stationary phase for supercritical fluid chromatography.

## Claims

1. A method for producing a stationary phase for chromatography, the method comprising radical copolymerization of a base material having a radically polymerizable functional group and a monomer having a radically polymerizable functional group in the presence of a radical initiator, wherein
the radical copolymerization is performed in a heterogeneous system including a phase of the monomer having the radically polymerizable functional group and a phase of a solvent.

2. The production method according to claim 1, wherein the base material having the radically polymerizable functional group includes a carrier and a polymer having a radically polymerizable functional group.

3. The production method according to claim 2, wherein the polymer having the radically polymerizable functional group is physically adsorbed on a surface of the carri er.

4. The production method according to claim 2 or 3, wherein the solvent is water or a mixed solvent of water and a water-soluble solvent in an amount of from 10 parts by volume to 300 parts by volume with respect to 100 parts by volume of water.

5. The production method according to claim 4, wherein the monomer having the radically polymerizable functional group is one or more selected from the group consisting of butadiene, 2,3-dimethyl-1,3-butadiene, 2-methyl-1,3-butadiene, divinylbenzene, allyl (meth)acrylate, and styrene.

6. The production method according to claim 1, wherein the base material having the radically polymerizable functional group is a carrier having the radically polymerizable functional group introduced on a carrier.

7. The production method according to claim 6, wherein the solvent is water or a mixed solvent of water and a water-soluble solvent in an amount of from 10 parts by volume to 300 parts by volume with respect to 100 parts by volume of water.

8. The production method according to claim 7, wherein the monomer having the radically polymerizable functional group is one or more selected from the group consisting of 2-vinylpyridine, 3-vinylpyridine, 4-vinylpyridine, 9-vinylcarbazole, 2-isopropenylpyridine, 3-isopropenylpyridine, 4-isopropenylpyridine, and 9-isopropenylcarbazole.

9. The production method according to claim 6, wherein the solvent is a lipophilic solvent having a water/1-octanol partition coefficient (logPow) of 0.5 or more.

10. The production method according to claim 9, wherein the monomer having the radically polymerizable functional group is one or more selected from the group consisting of 2-((meth)acryloyloxy)ethyl-2'-(trimethylammonio)ethyl phosphate, 2-(N-3-sulfopropyl-N,N-dimethylammonium)ethyl methacrylate, 3-(methacryloylamino)propyltrimethylammonium chloride, potassium 3-(methacryloyloxy)propanesulfonate, 2-hydroxyethyl methacrylate, and acrylamide.

## INTERNATIONAL SEARCH REPORT

International application No.
**PCT/JP2022/036248**

**A. CLASSIFICATION OF SUBJECT MATTER**

***B01J 20/281***(2006.01)i; ***B01J 20/283***(2006.01)i; ***B01J 20/285***(2006.01)i; ***B01J 20/286***(2006.01)i
FI: B01J20/281 X; B01J20/283; B01J20/285; B01J20/286

According to International Patent Classification (IPC) or to both national classification and IPC

**B. FIELDS SEARCHED**

Minimum documentation searched (classification system followed by classification symbols)

B01J20/281; B01J20/283; B01J20/285; B01J20/286

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

JSTPlus/JMEDPlus/JST7580 (JDreamIII)

**C. DOCUMENTS CONSIDERED TO BE RELEVANT**

| Category* | Citation of document, with indication, where appropriate, of the relevant passages | Relevant to claim No. |
|---|---|---|
| X | WO 97/036950 A1 (ARAKAWA CHEMICAL INDUSTRIES, LTD.) column 5, lines 2-13 | 1 |
| Y | | 2–10 |
| Y | JP 2002-148247 A (NAGOYA INDUSTRIAL SCIENCE RESEARCH INSTITUTE) 22 May 2002 (2002-05-22) claims 1-7 | 2–10 |
| Y | JP 2000-351810 A (MITSUBISHI CHEMICAL CORP.) 19 December 2000 (2000-12-19) paragraphs [0011], [0025] | 8-10 |
| A | JP 2021-015129 A (DAICEL CORP.) 12 February 2021 (2021-02-12) entire text, all drawings | 1-10 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **06 December 2022** | **20 December 2022** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**
**Information on patent family members**

International application No.
**PCT/JP2022/036248**

| Patent document cited in search report | Publication date (day/month/year) | Patent family member(s) | Publication date (day/month/year) |
|---|---|---|---|
| WO 97/036950 A1 | | (Family: none) | |
| JP 2002-148247 A | 22 May 2002 | (Family: none) | |
| JP 2000-351810 A | 19 December 2000 | (Family: none) | |
| JP 2021-015129 A | 12 February 2021 | US 2018/0050282 A1<br>entire text, all drawings<br>EP 3276341 A1 | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2002148247 A
- WO 03091185 A
- JP 2021015129 A
- JP 8231489 A
- WO 2017164289 A